# EUROPEAN PATENT SPECIFICATION

(11) **EP 3 736 094 B1**
(45) Date of publication and mention of the grant of the patent: **17.01.2024**
(21) Application number: 20170829.4
(22) Date of filing: 22.04.2020
(51) Int. Cl.: B23Q 1/03

(54) **WORKING CENTER FOR WOODEN WORKPIECES PROVIDED WITH AN INTERCHANGEABLE WORKING PLANE**
BEARBEITUNGSZENTRUM FÜR HOLZWERKSTÜCKE AUSGESTATTET MIT EINEM AUSTAUSCHBAREN ARBEITSPLAN
CENTRE D'USINAGE POUR PIÈCES DE BOIS ÉQUIPÉ AVEC UN PLAN DE TRAVAIL INTERCHANGEABLE

(30) Priority: 08.05.2019 IT 201900006620
(43) Date of publication of application: 11.11.2020
(73) Proprietor: SCM Group S.p.A., 47921 Rimini (RN) (IT)
(72) Inventor: BERTUCCIOLI, Alessandro, 47921 RIMINI (RN) (IT)
(74) Representative: Tiburzi, Andrea

(56) References cited:
- EP-A1- 2 153 954
- EP-A1- 2 363 260
- EP-A1- 2 875 923
- WO-A1-2016/124802
- DE-A1- 10 358 100
- DE-A1- 19 637 954
- IT-A1- PC20 110 018

## Description

The present invention relates to a working center according to the preamble of claim 1. Such a working center is known from the document DE 103 58 100 A1.

More in detail, the invention relates to a working center of the aforementioned type, designed and manufactured in particular to adapt a working plane to different types of machinings that require the use of bar working planes and multifunctional working planes for locking and positioning the wooden pieces to be machined, but which can be used for any piece to be worked, for which different processes are required to be carried out in the same working center.

In the following the description will be addressed to a working center for wooden pieces, but it is clear that the same should not be considered limited to this specific use.

As is well known, there are currently working centers for wooden pieces provided with a working plane comprising a base for resting on the ground and a plurality of support bars for the pieces to be worked, which are usually coupled to said base in a removable or movable way.

The support plane equipped with bars is used for a type of machining, in which it is necessary to have a free space below the support base of the piece to be worked, so as to allow the tools of the working center to go beyond the piece to be worked during machining.

There are also working centers equipped with a base, which a multifunctional working plane is coupled with.

By multifunction working plane means a continuous plane used for non-passing through machining in a vertical direction, that is orthogonal to the plane itself, provided with openings or holes, through which a vacuum system acts in one or more specific portions of the multifunction working plane itself, bounded by seals.

Therefore, in order to carry out different machinings on pieces to be machined, it is necessary to resort to working centers having the type of working plane most suitable for the machining to be performed on the workpiece.

The relevant prior art also includes patent applications DE 19637954 A1, IT PC20110018 A1, EP 2363260 A1, EP 2875923 A1, and EP 2153954 A1.

In light of the above, it is therefore an object of the present invention providing a working center equipped with a working surface interchangeable between a work surface equipped with support bars and a working surface equipped with a multifunctional support surface.

Another object of the invention is to equip the working plan of a working center automatically for the different machinings to be performed on the pieces to be worked.

A further object of the present invention is to provide a working center provided with an interchangeable surface having limited overall dimensions.

It is therefore specific object of the invention a working center for workpieces made in wood, ceramic, plastic, metal, glass, fiberglass, rubber and the like, comprising a base for standing on the ground, a working plane coupled to said base comprising a plurality of supporting bars, each being provided with a plurality of blocking means for supporting and fixing said workpieces to be worked said working center comprising at least one multifunction plane module coupled to at least one supporting bar of said plurality of supporting bars, and at least one supporting bar is capable to move from a first working position, in which said plurality of blocking means is capable to receive said workpieces to be worked, to a second working position, in which said at least one multifunction plane module is capable to receive said workpieces to be worked.

Further according to the invention, said at least one supporting bar is capable to rotate around a fulcrum coupled to said base, while moving from said first to said second working position.

Still according to the invention, said at least one supporting bar is capable to rotate is capable to rotate of 90° with respect to said working plane.

Preferably according to the invention, said working center comprises rotation means causing the moving of said at least one supporting bar from said first to said second working position.

Further according to the invention, said rotation means are linear or rotative, of the pneumatic, electric or hydraulic type.

Still according to the invention, said at least one multifunction plane module, coupled to at least one supporting bar, in said second working position is capable to rest on a consecutive supporting bar, with respect to the one it is coupled to.

Preferably according to the invention, to each supporting bar of said plurality of supporting bars is coupled a multifunction plane module, and said second working position of said supporting bars, said multifunction plane modules, coupled to each supporting bar of said plurality of supporting bars, are arranged side by side with each other so as to form a continuous multifunction working plane.

Further according to the invention, said base is provided with a plurality of retractable blocking pins, capable of contacting and blocking each supporting bar in said second working position.

Still according to the invention, said base comprises a plurality of vacuum channels capable of connecting to each multifunction plane module to block said workpiece to said multifunction plane module during the working.

The present invention will be now described, for illustrative but not limitative purposes, according to its preferred embodiments, with particular reference to the figures of the enclosed drawings, wherein:
figure 1 shows a front perspective view of the working center of wooden pieces provided with an interchangeable working plane, object of the present invention;
figure 2 shows a top view of the working center, shown in figure 1;
figure 3 shows a schematic front view of a bar of the working center shown in figure 1;
figure 4 shows a schematic side view of a detail of a bar of the working center, shown in figure 3;
figure 5 shows a further schematic side view of a detail of a bar of the working center, shown in figure 3;
figure 6a shows a perspective view of the bar of the working center, in a first working position;
figure 6b shows a further perspective view of the bar of the working center, shown in figure 6a;
figure 7a shows a perspective view of the bar of the working center, in a second working position;
figure 7b shows a further perspective view of the bar of the working center, shown in figure 7a;
figure 8 shows a front view of the bar of the working center, shown in figure 7b;
figure 9 shows a side view of a detail of the bar of the working center, in the second working position;
figure 10 shows a side view of the working center, in the first working position;
figure 11 shows a side view of a detail B of the working center, shown in figure 10;
figure 12 shows a side view of the working center, in the second working position;
figure 13 shows a side view of a detail C of the working center, shown in figure 12;
figure 14 shows a view according to a section taken along an axis D-D of the working center, shown in figure 12;
figure 15 shows a further side view of the working center, in the first working position;
figure 16 shows a front view of a bar of the working center, shown in figure 15;
figure 17 shows a detail A of the bar shown in figure 16;
figure 18 shows a further side view of the working center, in the second working position;
figure 19 shows a front view of a bar of the working center, shown in figure 18;
figure 20 shows a perspective view of the working center, in the second working position; and
figure 21 shows a top view of the working center, shown in figure 20.

In the various figures, similar parts will be indicated by the same reference numbers.

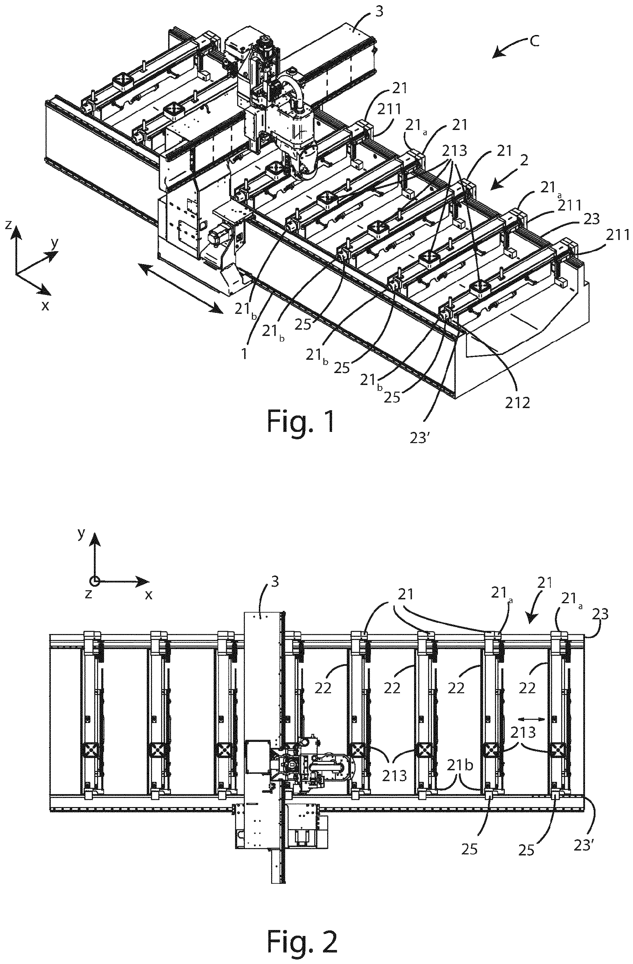

With reference to figures 1 and 2, the working center C of pieces in wood, ceramic, plastic, glass, fiberglass, and the like, provided with an interchangeable working plane, object of the present invention, comprises a base 1, through which said working center C rests on the ground, a working plane 2, for the support of the pieces to be worked, and a working unit 3, equipped with tools for working the pieces, not shown in the figure.

Said base 1 has an elongated shape, the main dimension of which extends mainly according to a development direction parallel to the axis indicated by X.

Said working plane 2 is coupled with said base 1 and also has an elongated shape, the main dimension of which extends mainly in a development direction parallel to the X axis.

Said working unit 3 comprises working tools, not shown in the figure, for working the pieces resting on said working plane 2.

Said working unit 3 comprises a working head, which supports and operates relative working tools and is covered by a protective casing.

Said working unit 3 is slidingly coupled to said base 1 to translate along the X axis.

Said working plane 2 comprises a plurality of support bars 21, arranged aligned in a direction parallel to an axis orthogonal to the X axis, indicated with Y, and suitable for supporting and locking the pieces to be worked.

Each bar 21 is slidably coupled to said base 2, by means of a first 23 and a second 23' guide, and is capable of translating in a direction parallel to the axis indicated by X by means of an independently operated motor 26.

In particular, each bar 21 has a first end 21ₐ and a second end 21_{b}, respectively provided with a first sliding pad 211 and a second sliding pad 212.

Each first 211 and second 212 sliding pad slidingly couples with one respective of said first 23 and second 23' guide.

In particular, the first sliding pad 211 is slidingly coupled with said first guide 23 and the second sliding pad 212 is slidingly coupled to said second guide 23'.

Furthermore, according to the invention, each support bar 21 is provided with a plurality of locking means, such as suckers 213, into which intake air flows by means of a vacuum system of the working center C, through which it is possible to block the piece to be worked during the machining by said working unit 3.

Each sucker 213 is capable of sliding along the respective bar 21, on which it is mounted, according to a direction parallel to the Y axis, manually or by means of transmission means 214.

Said working center C is equipped with at least one multifunction plane module 22, which is used for non-passing through machining, as previously described, to be performed on the pieces to be worked.

In particular, said at least one multifunction plane module 22 is coupled with each bar 21 and moves integrally with it to position itself on said working plane 2, so as to form a continuous working plane.

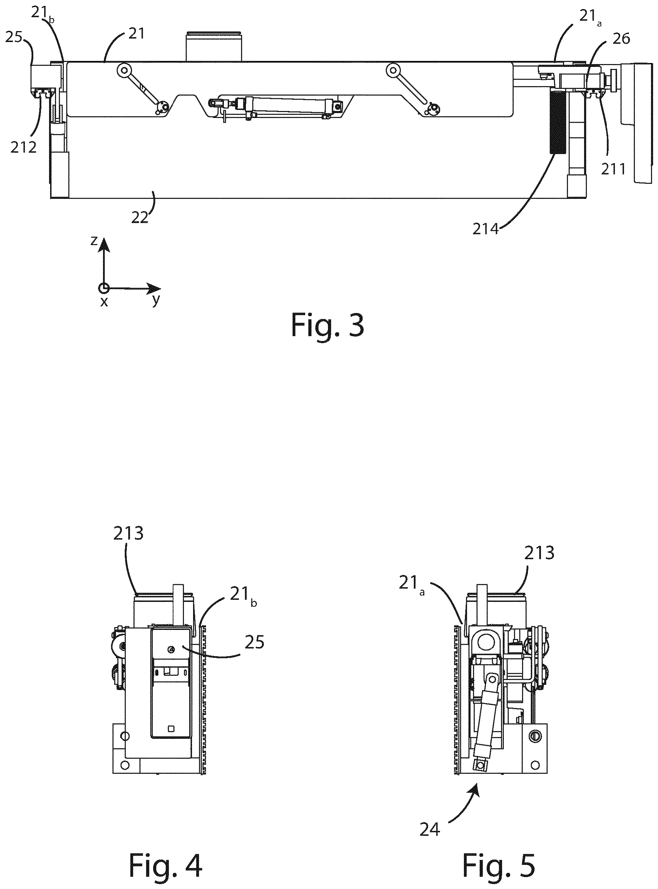

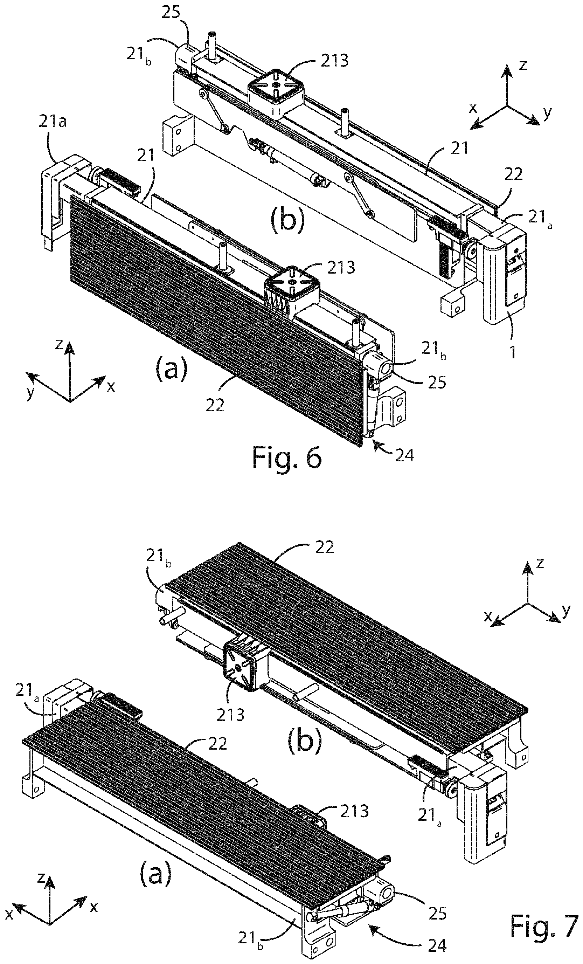

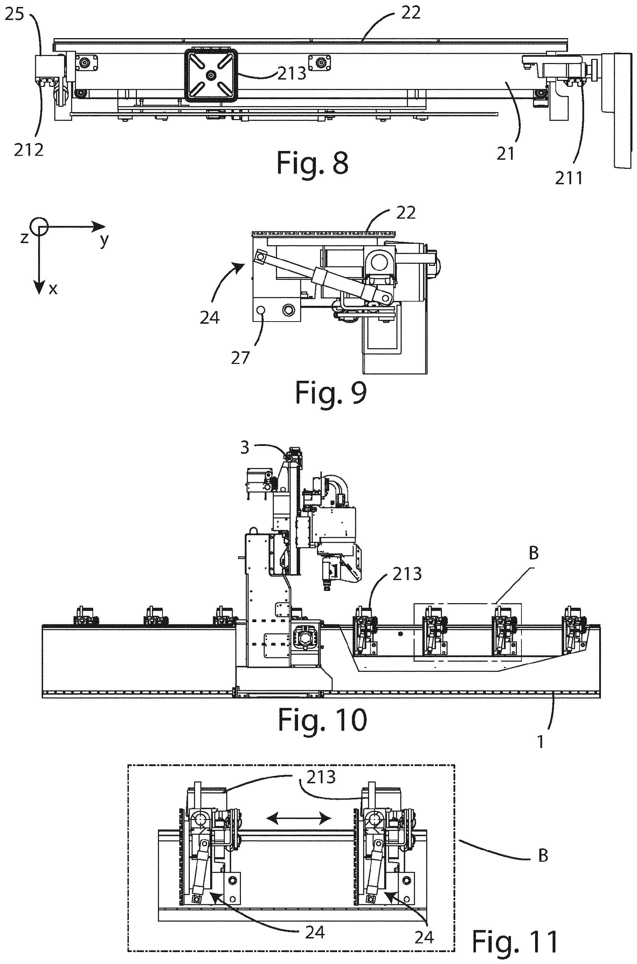

In particular, with reference to figures 3-12, each bar 21 is provided with rotation means 24 for rotating 90° with respect to a respective fulcrum 25, coupled with said base 1.

Said rotation means 24 can be linear, or rotary, of the pneumatic, electric or hydraulic type, for example jacks.

Between each bar 21 and the respective fulcrum 25 there are bearings, not shown in the figure, to allow the rotation of each bar 21 with respect to said base 1.

In particular, each bar 21 and therefore each multifunction plane module 22 are movable between a first working position and a second working position.

In particular, in the first working position, said working plane 2 is configured to operate in the working mode, in which the pieces to be worked are placed on the suckers 23; in this position, the multifunction plane modules 22 are arranged all of them parallel and lying on a plane parallel to the ZY plane.

In the second working position, said working plane 2 is configured to operate in the working mode with a multifunctional plane, in which the pieces to be worked are placed on each multifunction plane module 22; in this position, the bars 21 are rotated 90° with respect to the first working position, so that each multifunction plane module 22 is arranged on said working plane 2, lying on a plane parallel to the XY plane, and each module 22 is next to the following and/or to the previous module 22.

Each multifunction plane module 22 coupled to a bar 21 rests on the following bar 21 when it is in the second working position.

It is also possible that each bar 21 is provided with a protrusion, not shown in the figure, for resting a multifunction plane module 22 in said second working position.

In said second working position, said suckers 213 remain coupled to said bars 21 and are not disassembled.

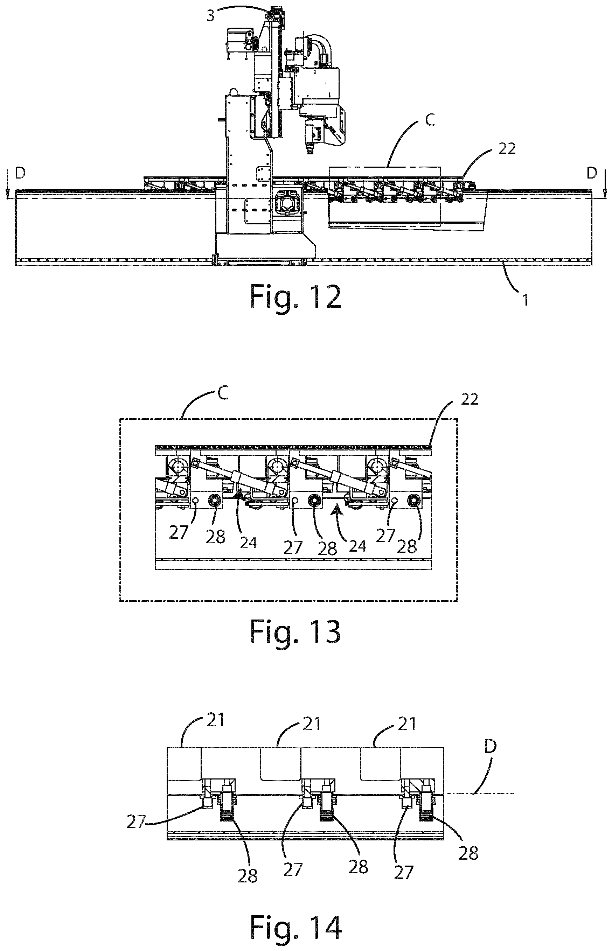

Each bar 21 is positioned automatically along the X axis, according to the machining programming that the working center C has to perform. Furthermore, referring to figures 13 and 14, the base 1 is provided with a plurality of retractable locking pins 27, preferably pneumatically operated, capable of fitting into a respective housing of each bar 21 to rigidly support it in the second working position.

Furthermore, said base 1, in addition to the vacuum system used when the working center C works with a working plane 2 comprising said plurality of support bars 21, can also be provided with a plurality of vacuum channels 28, capable of connecting to each multifunction plane module 22 and to the vacuum system of said working center C, so as to supply suction air necessary for the operation in said second working position.

The operation of the working center C described above is as follows.

When it is necessary to perform a machining on a piece to be worked which requires that the working plane 2 comprises said plurality of multifunction plane module 22, each bar 21 passes from said first working position to said second working position.

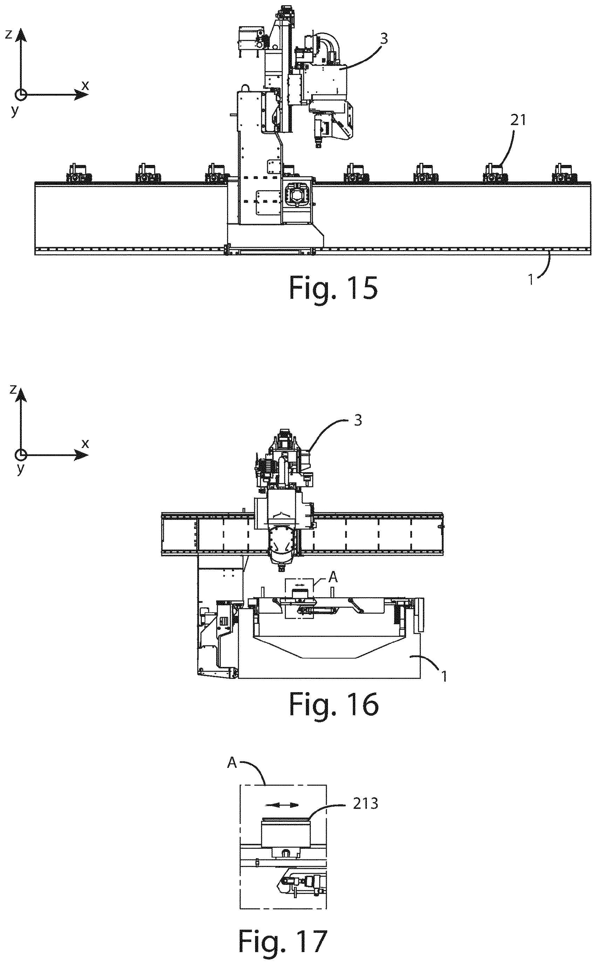

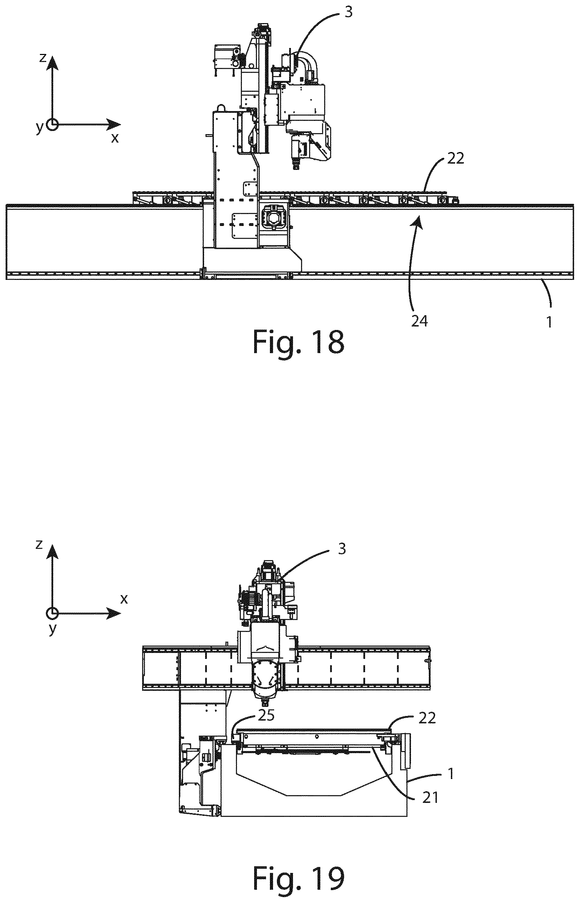

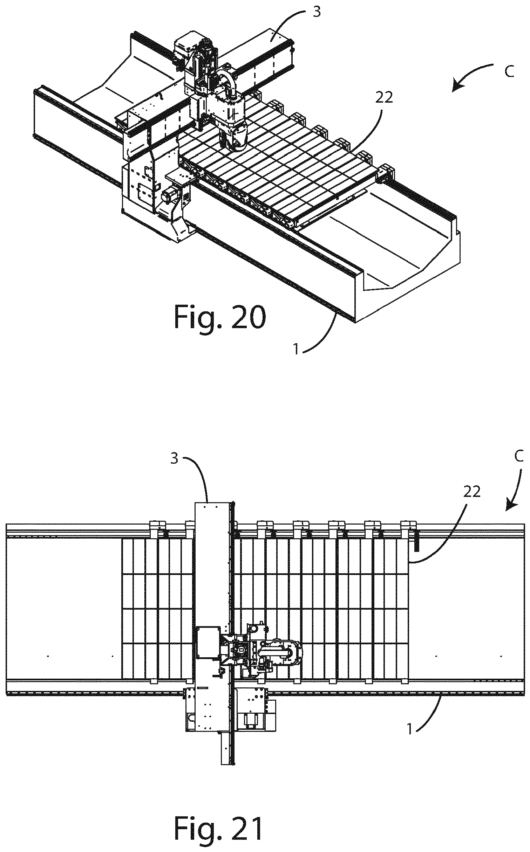

In particular, referring also to figures 15-21, each rotation means 24 is activated and, by lengthening, causes the rotation of 90° of each bar 21 from said first working position towards said second working position, thus bringing each respective multifunction plane module 22 from the plane parallel to the ZY plane, to a plane parallel to the XY plane.

During the rotation, each bar 21 rotates around its own fulcrum 25.

After the 90° rotation, each bar 21 carries out a relative translation with respect to the immediately preceding and/or following bars 21, along the X axis, according to the machining program.

The movement of each bar 21 can also take place manually by a user.

Once the predetermined position is reached, each bar 21 gets closer towards the immediately preceding and/or following bar by translating along said X axis, so that each multifunction plane module 22 is placed side by side and coplanar with the previous and/or following one to form a single multifunction working plane.

Each bar 21 is spaced from the previous and/or following one by a predefined distance according to the machining program.

Furthermore, in said second working position, said plurality of locking pins 27 are inserted in a respective housing of each bar 21, to rigidly support it in the second working position.

Furthermore, when present, said plurality of vacuum channels 28 is connected to the vacuum system of said working center C, to supply suction air necessary for the operation in said second working position.

As is apparent from the above description, said working center C allows the working plane 2 to be quickly equipped with multifunction working plane modules according to the various locking needs and consequent workings to be performed on a piece to be machined.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Working center (C) for workpieces made in wood, ceramic, plastic, metal, glass, fiberglass, rubber and the like, comprising:
a base (1) for standing on the ground having an elongated shape which extends mainly according to a development direction parallel to a X axis;
a working plane (2) coupled to said base (1) comprising a plurality of supporting bars (21), each being provided with a plurality of blocking means (213) for supporting and fixing said workpieces to be worked, wherein each of said blocking means (213) is capable of sliding along the respective supporting bar (21), on which it is mounted, according to a direction parallel to a Y axis, which is orthogonal to said X axis, manually or by means of transmission means (214);
said working center (C) being **characterized**
**in that** it comprises at least one multifunction plane module (22) coupled to at least one supporting bar (21) of said plurality of supporting bars (21) which moves integrally with it to position itself on said working plane (2), so as to form a continuous working plane,
**in that** said at least one supporting bar (21) is capable to move from a first working position, in which said plurality of blocking means (213) is capable to receive said workpieces to be worked, to a second working position, in which said at least one multifunction plane module (22) is capable to receive said workpieces to be worked, and
**in that** said at least one supporting bar (21) is capable to rotate around a fulcrum (25) coupled to said base (1), while moving from said first to said second working position.

2. Working center (C) according to the preceding claim, **characterized in that** said at least one supporting bar (21) is capable to rotate is capable to rotate of 90° with respect to said working plane (2).

3. Working center (C) according to any one of the preceding claims, **characterized in that** it comprises rotation means (24) causing the moving of said at least one supporting bar (21) from said first to said second working position.

4. Working center (C) according to the preceding claim, **characterized in that** said rotation means (24) are linear or rotative, of the pneumatic, electric or hydraulic type.

5. Working center (C) according to any one of the preceding claims, **characterized in that** said at least one multifunction plane module (22), coupled to at least one supporting bar (21), in said second working position is capable to rest on a consecutive supporting bar (21), with respect to the one it is coupled to.

6. Working center (C) according to any one of the preceding claims, **characterized**
**in that** said to each supporting bar of said plurality of supporting bars (21) is coupled a multifunction plane module (22), and
**in that**, in said second working position of said supporting bars (21), said multifunction plane modules (22), coupled to each supporting bar of said plurality of supporting bars (21), are arranged side by side with each other so as to form a continuous multifunction working plane.

7. Working center (C) according to any one of the preceding claims, **characterized in that** said base (1) is provided with a plurality of retractable blocking pins (27), capable of contacting and blocking each supporting bar (21) in said second working position.

8. Working center (C) according to any one of the preceding claims, **characterized in that** said base (1) comprises a plurality of vacuum channels (28) capable of connecting to each multifunction plane module (22) to block said workpiece (P) to said multifunction plane module (22) during the working.

## Patentansprüche

1. Bearbeitungszentrum (C) für Werkstücke aus Holz, Keramik, Kunststoff, Metall, Glas, Glasfaser, Gummi und dergleichen, umfassend: eine Basis (1) zum Aufstellen auf dem Boden, die eine längliche Form aufweist, die sich hauptsächlich in einer Erstreckungsrichtung parallel zu einer X-Achse erstreckt; eine Arbeitsebene (2), die mit der Basis (1) gekoppelt ist, umfassend eine Vielzahl von Tragstangen (21) umfasst, die jeweils mit einer Vielzahl von Blockiereinrichtungen (213) zum Tragen und Fixieren der zu bearbeitenden Werkstücke versehen sind, wobei jede der Blockiereinrichtungen (213) in der Lage ist, entlang der jeweiligen Tragstange (21), an der es angebracht ist, gemäß einer Richtung parallel zu einer Y-Achse, die orthogonal zu der X-Achse ist, manuell oder mittels Übertragungseinrichtungen (214) zu gleiten; wobei das Bearbeitungszentrum (C) **dadurch gekennzeichnet ist, dass** es mindestens ein Multifunktionsebenenmodul (22) umfasst, das mit mindestens einer Tragstange (21) der Vielzahl von Tragstangen (21) gekoppelt ist, die sich mit ihr zusammen verschiebt, um sich auf der Arbeitsebene (2) zu positionieren, sodass eine durchgehende Arbeitsebene gebildet wird, dass der mindestens eine Tragbalken (21) in der Lage ist, sich von einer ersten Arbeitsposition, in der die Vielzahl von Blockiereinrichtungen (213) in der Lage ist, die zu bearbeitenden Werkstücke aufzunehmen, in eine zweite Arbeitsposition zu bewegen, in der das mindestens eine Multifunktionsebenenmodul (22) in der Lage ist, die zu bearbeitenden Werkstücke aufzunehmen, und dass die mindestens eine Tragstange (21) in der Lage ist, um einen Drehpunkt (25) zu drehen, der mit der Basis (1) verbunden ist, während sie sich von der ersten in die zweite Arbeitsposition bewegt.

2. Bearbeitungszentrum (C) nach dem vorherigen Anspruch, **dadurch gekennzeichnet, dass** die mindestens eine Tragstange (21) in Bezug auf die Bearbeitungsebene (2) um 90° drehbar ist.

3. Bearbeitungszentrum (C) nach einem der vorherigen Ansprüche, **dadurch gekennzeichnet, dass** es Dreheinrichtungen (24) umfasst, die die Bewegung der mindestens einen Tragstange (21) von der ersten in die zweite Arbeitsposition bewirken.

4. Bearbeitungszentrum (C) nach dem vorherigen Anspruch, **dadurch gekennzeichnet, dass** die Dreheinrichtungen (24) linear oder drehend sind, vom pneumatischen, elektrischen oder hydraulischen Typ.

5. Bearbeitungszentrum (C) nach einem der vorherigen Ansprüche, **dadurch gekennzeichnet, dass** das mindestens eine Multifunktionsebenenmodul (22), das mit mindestens einer Tragstange (21) gekoppelt ist, in der zweiten Arbeitsposition in der Lage ist, auf einer aufeinanderfolgenden Tragstange (21) in Bezug auf jene, mit der es gekoppelt ist, zu ruhen.

6. Bearbeitungszentrum (C) nach einem der vorherigen Ansprüche, **dadurch gekennzeichnet, dass** an jede Tragstange der Vielzahl von Tragstangen (21) ein Multifunktionsebenenmodul (22) gekoppelt ist, und dass in der zweiten Arbeitsposition der Tragstangen (21) die Multifunktionsebenenmodule (22), die mit jeder Tragstange der Vielzahl von Tragstangen (21) gekoppelt sind, nebeneinander angeordnet sind, um eine durchgehende Multifunktionsarbeitsebene zu bilden.

7. Bearbeitungszentrum (C) nach einem der vorherigen Ansprüche, **dadurch gekennzeichnet, dass** die Basis (1) mit einer Vielzahl von einziehbaren Blockierstiften (27) versehen ist, die in der Lage sind, jede Tragstange (21) in der zweiten Arbeitsposition zu berühren und zu blockieren.

8. Bearbeitungszentrum (C) nach einem der vorherigen Ansprüche, **dadurch gekennzeichnet, dass** die Basis (1) eine Vielzahl von Vakuumkanälen (28) umfasst, die in der Lage sind, mit jedem Multifunktionsebenenmodul (22) verbunden zu werden, um das Werkstück (P) während der Bearbeitung an dem Multifunktionsebenenmodul (22) zu blockieren.

## Revendications

1. Centre d'usinage (C) pour pièces en bois, céramique, plastique, métal, verre, fibre de verre, caoutchouc et similaires, comprenant: une base (1) à poser sur le sol ayant une forme allongée qui s'étend principalement selon une direction de développement parallèle à un axe X; un plan de travail (2) couplé à ladite base (1) comprenant une pluralité de barres de support (21), chacune étant dotée d'une pluralité de moyens de blocage (213) pour supporter et fixer lesdites pièces à usiner, dans lequel chacun desdits moyens de blocage le moyen (213) est capable de coulisser le long de la barre de support respective (21), sur laquelle il est monté, selon une direction parallèle à un axe Y, qui est orthogonal audit axe X, manuellement ou au moyen de moyens de transmission (214); ledit centre de travail (C) étant **caractérisé en ce qu'**il comprend au moins un module plan multifonction (22) couplé à au moins une barre de support (21) de ladite pluralité de barres de support (21) qui se déplace solidairement avec elle pour se positionner sur ledit plan de travail (2), de manière à pour former un plan de travail continu, **en ce que** ladite au moins une barre de support (21) est capable de se déplacer depuis une première position de travail, dans laquelle ladite pluralité de moyens de blocage (213) est capable de recevoir lesdites pièces à usiner, jusqu'à une seconde position de travail, dans laquelle ledit au moins un module plan multifonction (22) est apte à recevoir lesdites pièces à usiner, et **en ce que** ladite au moins une barre de support (21) est capable de tourner autour d'un point d'appui (25) couplé à ladite base (1), tout en se déplaçant de ladite première à ladite seconde position de travail.

2. Centre de travail (C) selon la revendication précédente, **caractérisé en ce que** ladite au moins une barre de support (21) est susceptible de tourner de 90° par rapport audit plan de travail (2).

3. Centre de travail (C) selon l'une quelconque des revendications précédentes, **caractérisé en ce qu'**il comprend des moyens de rotation (24) provoquant le déplacement de ladite au moins une barre de support (21) de ladite première à ladite deuxième position de travail.

4. Centre de travail (C) selon la revendication précédente, **caractérisé en ce que** lesdits moyens de rotation (24) sont linéaires ou rotatifs, de type pneumatique, électrique ou hydraulique.

5. Centre de travail (C) selon l'une quelconque des revendications précédentes, **caractérisé en ce que** ledit au moins un module plan multifonction (22), couplé à au moins une barre de support (21), dans ladite deuxième position de travail est apte à se reposer sur une barre de support consécutive (21), par rapport à celle à laquelle elle est accouplée.

6. Centre de travail (C) selon l'une quelconque des revendications précédentes, caractérisé en à chaque barre de support de ladite pluralité de barres de support (21) est couplé un module plan multifonction (22), et en ce que, dans ladite seconde position de travail desdites barres de support (21), lesdits modules plans multifonctions (22), couplés à chaque barre de support de ladite pluralité de barres de support (21), sont disposés côte à côte les uns avec les autres de manière à former un plan de travail multifonction continu.

7. Centre de travail (C) selon l'une quelconque des revendications précédentes, **caractérisé en ce que** ladite base (1) est munie d'une pluralité de broches de blocage escamotables (27), capables de venir en contact et de bloquer chaque barre de support (21) dans ladite deuxième position de travail.

8. Centre de travail (C) selon l'une quelconque des revendications précédentes, **caractérisé en ce que** ladite base (1) comprend une pluralité de canaux à vide (28) aptes à se connecter à chaque module plan multifonction (22) pour bloquer ladite pièce (P) audit module plan multifonction (22) pendant le travail.
